# EUROPEAN PATENT SPECIFICATION

(11) **EP 4 342 079 B1**
(45) Date of publication and mention of the grant of the patent: **02.07.2025**
(21) Application number: 22723832.6
(22) Date of filing: 11.05.2022
(51) Int. Cl.: H02S 40/10, A47L 1/02, F24S 40/20

(54) **SURFACE WASHING SYSTEM AND METHOD FOR MOUNTING A SURFACE WASHING SYSTEM**
OBERFLÄCHENWASCHANLAGE UND VERFAHREN ZUR MONTAGE EINER OBERFLÄCHENWASCHANLAGE
SYSTÈME DE LAVAGE DE SURFACE ET PROCÉDÉ DE MONTAGE D'UN SYSTÈME DE LAVAGE DE SURFACE

(30) Priority: 17.05.2021 NL 2028225
(43) Date of publication of application: 27.03.2024
(73) Proprietor: 4wwwwie B.V., 1191 SK Ouderkerk aan de Amstel (NL)
(72) Inventor: KAHN, Alain, 1191 SK Ouderkerk aan de Amstel (NL); KÄLIN, Rudolf, 1191 SK Ouderkerk aan de Amstel (NL); ROELOFSEN, Geurt, 1191 SK Ouderkerk aan de Amstel (NL); STEIJLING, Jacob Jan Frederik, 1191 SK Ouderkerk aan de Amstel (NL)
(74) Representative: Arnold & Siedsma
(86) International application number: PCT/NL2022/050258
(87) International publication number: WO 2022/245204

(56) References cited:
- EP-A1- 2 422 889
- CN-A- 108 722 918
- CN-A- 111 327 262
- JP-A- 2002 273 351
- KR-B1- 102 139 461

## Description

The invention relates to a surface washing system, comprising a frame and a washing unit for washing a substantially flat surface, such as a solar panel or a window; wherein said frame comprises first and second elongated and mutually parallel guides to be mounted at two spaced apart parallel sides of said surface; wherein said washing unit is mounted to said guides by respective first and second sliders on said respective first and second guides and by first actuator means in such a manner that said washing unit is movable between said guides in longitudinal direction of said guides; wherein said washing unit is mounted to said guides by second actuator means in such a manner that said washing unit is movable between said guides in lateral direction of said guides. KR 102 139 461 B1 relates to an automatic solar module cleaning device allowing horizontal and lateral movement of the washing unit.

The invention in particular relates to a surface washing system which is designed to be installed to clean large surfaces, which may have different sizes in each instance. The system is in particular aimed at large "solar farms", which may comprise a large amount of photovoltaic solar panels arranged in a field in PV-arrays of tens or hundreds meters long. In order to maximize the power generated by the solar panels, it is important that the surface of the panels is regularly cleaned from dirt.

The goal of the invention is a system for cleaning surfaces such as solar panels or windows, which is reliable, cost effective, and/or which can be easily adapted to be installed for different sizes of the surfaces to be cleaned.

According to a first aspect of the invention said system comprises a water hose and/or a power cable for supplying water and/or electrical power to said washing unit from an external water and/or power source; wherein said water hose and/or power cable is/are fixed between a first outer end of a first one of said guides and said washing unit and has a fixed length there between which is substantially equal to the sum of the longitudinal distance between the outer ends of the guides and the lateral distance between the guides, wherein said water hose and/or power cable is/are routed in a first longitudinal direction from said first outer end, over a first longitudinal pulley which is movable in said longitudinal direction, and from said first longitudinal pulley towards said first slider in a second longitudinal direction along said first guide which is opposite to said first longitudinal direction, and wherein said water hose and/or power cable is/are routed from said first slider in a first lateral direction, over a first lateral pulley which is movable in said lateral direction, and from said first lateral pulley towards the washing unit in a second lateral direction which is opposite to said first lateral direction; wherein a first tension wire is fixed between a second outer end of said first guide and said first slider and has a fixed length there between, wherein said first tension wire is routed from said second outer end, over a second longitudinal pulley which is fixed to said first longitudinal pulley, and from said second longitudinal pulley to a third longitudinal pulley which is fixed to said second outer end, and from said third longitudinal pulley to a fourth longitudinal pulley which is fixed to said first outer end, and from said fourth longitudinal pulley to said first slider; and wherein a second tension wire is fixed between said second slider and said washing unit and has a fixed length there between, wherein said second tension wire is routed from said second slider, over a second lateral pulley which is fixed to said first lateral pulley, and from said second lateral pulley to a third lateral pulley which is fixed to said second slider, and from said third lateral pulley to a fourth lateral pulley which is fixed to said first slider, and from said fourth lateral pulley to said washing unit. Preferably said system comprises both the said water hose for supplying water to said washing unit from an external water source and the said power cable for supplying electrical power to said washing unit from an external power source, wherein said water hose and said power cable extend substantially parallel to each other.

By the above construction, the frame with the water hose and the power cable can easily be made to any length and width, without the routing of the hose and cable being a problem, and by arranging the hose and power cable parallel to each other, the strength of the power cable prevents the water hose from being stretched.

Preferably said water hose and said power cable extend over respective different ones of said first longitudinal and first lateral pulleys, wherein the first longitudinal pulley for the water hose and the first longitudinal pulley for the power cable are fixed to each other, and the wherein the second longitudinal pulley for the water hose and the second longitudinal pulley for the power cable are fixed to each other.

Preferably said first lateral pulley is mounted on a third slider on said first guide such that it is movable along said guide.

Preferably said water hose and/or power cable is/are fixed to said first slider, and extend(s) therefrom in said longitudinal direction towards the first longitudinal pulley and in said lateral direction towards the first lateral pulley.

Preferably the washing unit comprises at least one electrically powered motor for driving said first actuator means, said second actuator means and/or one or more movable brushes of said washing unit, wherein said motor is powered by said electrical cable.

Preferably said power cable is a copper cable. Preferably said water hose is a flexible plastic hose.

The invention also relates to a solar panel or window provided with a surface washing system. In particular the invention also relates to a solar panel provided with a surface washing system, wherein said solar panel extends at an angle with a horizontal plane, and wherein the guides extend along the respective top and bottom sides of the solar panel.

Preferably the length of the solar panel in horizontal direction is a multitude of the length in the direction perpendicular thereto.

The invention also relates to a method for mounting a surface washing system to a substantially flat surface, such as a solar panel or a window, said method comprising the steps of: mounting a frame comprising first and second elongated and mutually parallel guides at two spaced apart parallel sides of said surface; mounting a washing unit to said guides by respective first and second sliders on said respective first and second guides and by first actuator means in such a manner that said washing unit is movable between said guides in longitudinal direction of said guides; wherein said washing unit is mounted to said guides by second actuator means in such a manner that said washing unit is movable between said guides in lateral direction of said guides; providing a water hose and/or a power cable which has a fixed length which is substantially equal to the sum of the longitudinal distance between the outer ends of the guides and the lateral distance between the guides for supplying water and/or electrical power to said washing unit from an external water and/or power source; fixing said water hose and/or power cable between a first outer end of a first one of said guides and said washing unit, wherein said water hose and/or power cable is/are routed in a first longitudinal direction from said first outer end, over a first longitudinal pulley which is movable in said longitudinal direction, and from said first longitudinal pulley towards said first slider in a second longitudinal direction along said first guide which is opposite to said first longitudinal direction, and wherein said water hose and/or power cable is/are routed from said first slider in a first lateral direction, over a first lateral pulley which is movable in said lateral direction, and from said first lateral pulley towards the washing unit in a second lateral direction which is opposite to said first lateral direction; fixing a first tension wire which has a fixed length between a second outer end of said first guide and said first slider, wherein said first tension wire is routed from said second outer end, over a second longitudinal pulley which is fixed to said first longitudinal pulley, and from said second longitudinal pulley to a third longitudinal pulley which is fixed to said second outer end, and from said third longitudinal pulley to a fourth longitudinal pulley which is fixed to said first outer end, and from said fourth longitudinal pulley to said first slider; and fixing a second tension wire which has a fixed length between said second slider and said washing unit, wherein said second tension wire is routed from said second slider, over a second lateral pulley which is fixed to said first lateral pulley, and from said second lateral pulley to a third lateral pulley which is fixed to said second slider, and from said third lateral pulley to a fourth lateral pulley which is fixed to said first slider, and from said fourth lateral pulley to said washing unit.

According to a second aspect of the invention said washing unit comprises: a washing frame; a rotatable disc shaped central brush mounted on said washing frame which is arranged to engage said flat surface to be washed and driven to be rotated around its axis, wherein the axis of said central brush is perpendicular to said longitudinal and lateral directions; at least one first cylindrical lateral brush, at least one second cylindrical lateral brush, at least one third cylindrical lateral brush and at least one fourth cylindrical lateral brush mounted on said washing frame, which are arranged to engage said flat surface to be washed and driven to be rotated around their respective axes, which lateral brushes extend adjacent said central brush at four different sides thereof, wherein the respective axes of said first and second lateral brushes are parallel to said longitudinal direction, and the respective axes of said third and fourth lateral brushes are parallel to said lateral direction.

By this arrangement of the brushes, the system can effectively clean large surfaces, while also reaching the outer corners of the surfaces.

Preferably said lateral brushes are arranged on a square circumference around said central brush, wherein said lateral brushes are arranged at least adjacent the four corners of said square.

Preferably said central brush and said lateral brushes are mutually coupled, for instance by means of gear wheels, such that all said brushes are forced to rotate around their respective axes if one of said brushes is driven.

Preferably the central brush is driven by a motor and the lateral brushes are driven by rotation of the central brush.

Preferably the lateral brushes comprise a pair of first cylindrical lateral brushes, a pair of second cylindrical lateral brushes, a pair of third cylindrical lateral brushes and a pair of fourth cylindrical lateral brushes mounted on said washing frame, wherein the two brushes of each pair of brushes is spaced apart and a lateral driving gear is mounted between the two brushes of said pair of brushes,

said lateral driving gear engaging the central brush and an outer end of each of the brushes of said pair of brushes.

The invention also relates to a washing unit comprising: a washing frame; a rotatable disc shaped central brush mounted on said washing frame which is arranged to engage a flat surface to be washed and driven to be rotated around its axis, wherein the axis of said central brush is perpendicular to said longitudinal and lateral directions; at least one first cylindrical lateral brush, at least one second cylindrical lateral brush, at least one third cylindrical lateral brush and at least one fourth cylindrical lateral brush mounted on said washing frame, which are arranged to engage said flat surface to be washed and driven to be rotated around their respective axes, which lateral brushes extend adjacent said central brush at four different sides thereof, wherein the respective axes of said first and second lateral brushes are parallel to said longitudinal direction, and the respective axes of said third and fourth lateral brushes are parallel to said lateral direction.

The invention also relates in a third aspect to a surface washing system, comprising a frame and a washing unit for washing a substantially flat surface, such as a solar panel or a window, wherein said frame comprises first and second elongated and mutually parallel guides to be mounted at two spaced apart parallel sides of said surface, wherein said washing unit is mounted to said guides by respective first and second sliders on said respective first and second guides and by first actuator means in such a manner that said washing unit is movable between said guides in longitudinal direction of said guides, wherein said washing unit is mounted to said guides by second actuator means in such a manner that said washing unit is movable between said guides in lateral direction of said guides, wherein said system comprises a water hose for supplying water to said washing unit from an external water source, wherein said washing unit comprises: a washing frame, a rotatable disc shaped central brush mounted on said washing frame which is arranged to engage said flat surface to be washed and driven to be rotated around its axis, wherein the axis of said central brush is perpendicular to said longitudinal and lateral directions, at least one first cylindrical lateral brush, at least one second cylindrical lateral brush, at least one third cylindrical lateral brush and at least one fourth cylindrical lateral brush mounted on said washing frame, which are arranged to engage said flat surface to be washed and driven to be rotated around their respective axes, which lateral brushes extend adjacent said central brush at four different sides thereof, wherein the respective axes of said first and second lateral brushes are parallel to said longitudinal direction, and the respective axes of said third and fourth lateral brushes are parallel to said lateral direction.

Optionally, in the surface washing system, said lateral brushes are arranged on a square circumference around said central brush, wherein said lateral brushes are arranged at least adjacent the four corners of said square.

Optionally, in the surface washing system, said central brush and said lateral brushes are mutually coupled, for instance by means of gear wheels, such that all said brushes are forced to rotate around their respective axes if one of said brushes is driven. Preferably, the central brush is driven by a motor and the lateral brushes are driven by rotation of the central brush. Further preferably, the lateral brushes comprise a pair of first cylindrical lateral brushes, a pair of second cylindrical lateral brushes, a pair of third cylindrical lateral brushes and a pair of fourth cylindrical lateral brushes mounted on said washing frame, wherein the two brushes of each pair of brushes is spaced apart and a lateral driving gear is mounted between the two brushes of said pair of brushes, said lateral driving gear engaging the central brush and an outer end of each of the brushes of said pair of brushes.

The invention will be elucidated by means of a preferred embodiment, with reference to the figures, wherein:
Figure 1 is a perspective view of a surface washing system for a solar panel arrangement seen from below the solar panel;

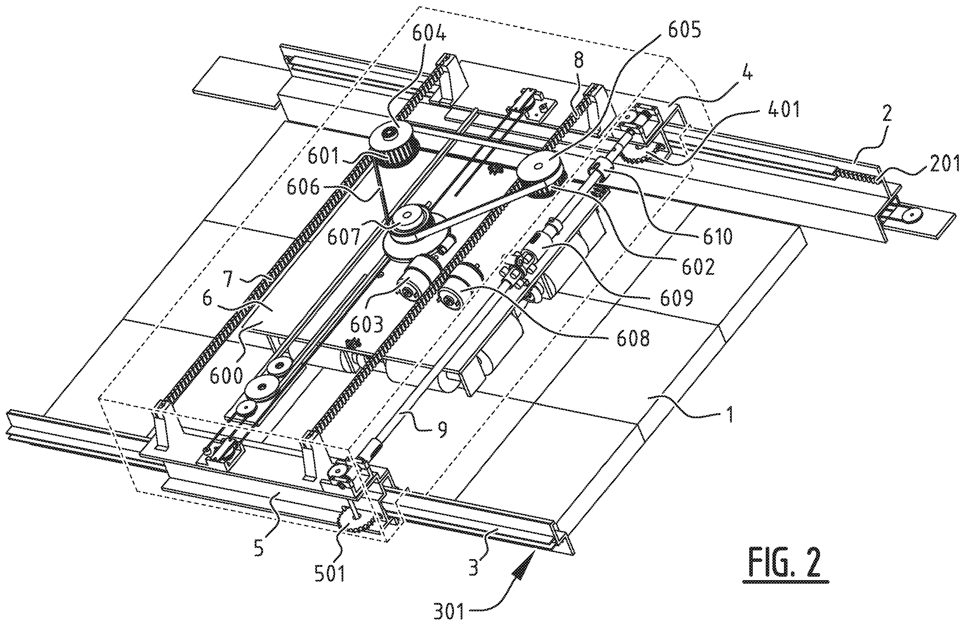

Figure 2 is a perspective view of the surface washing system of figure 1, seen from above the solar panel;

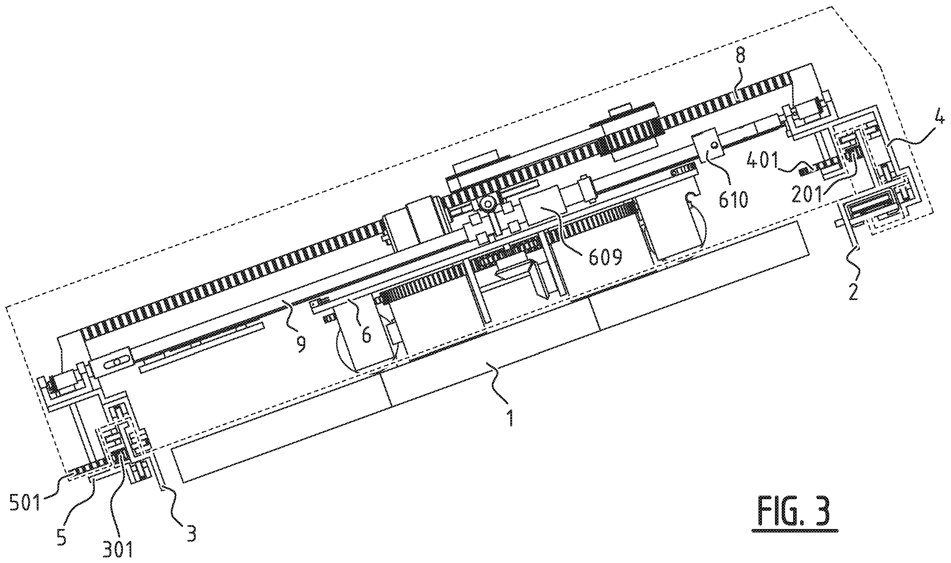

Figure 3 is a side view of the surface washing system of figure 1;
Figure 4A is a plan view of the surface washing system of figure 1, seen from above the solar panel, wherein the routing of the water hose in the system is accentuated;

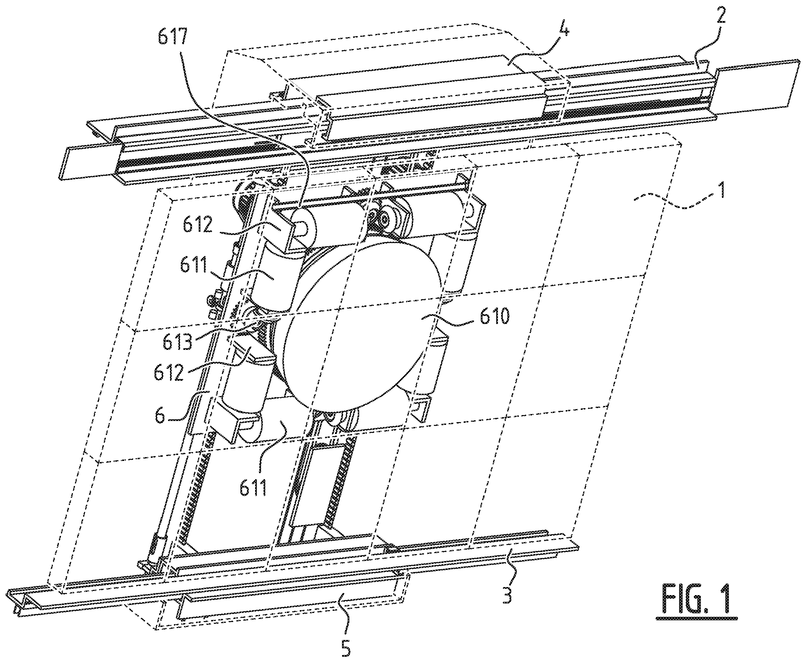

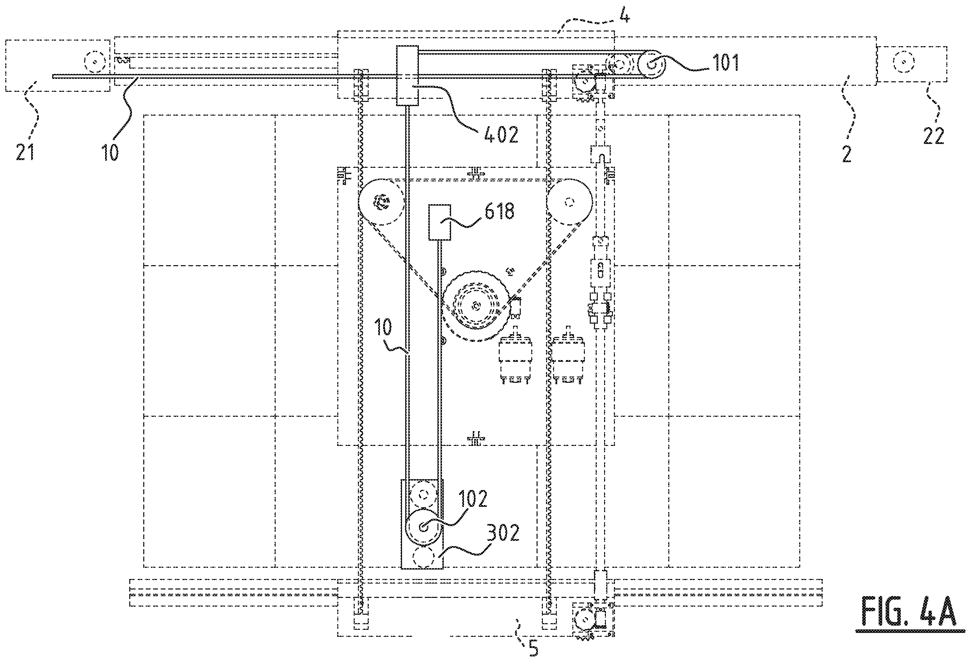

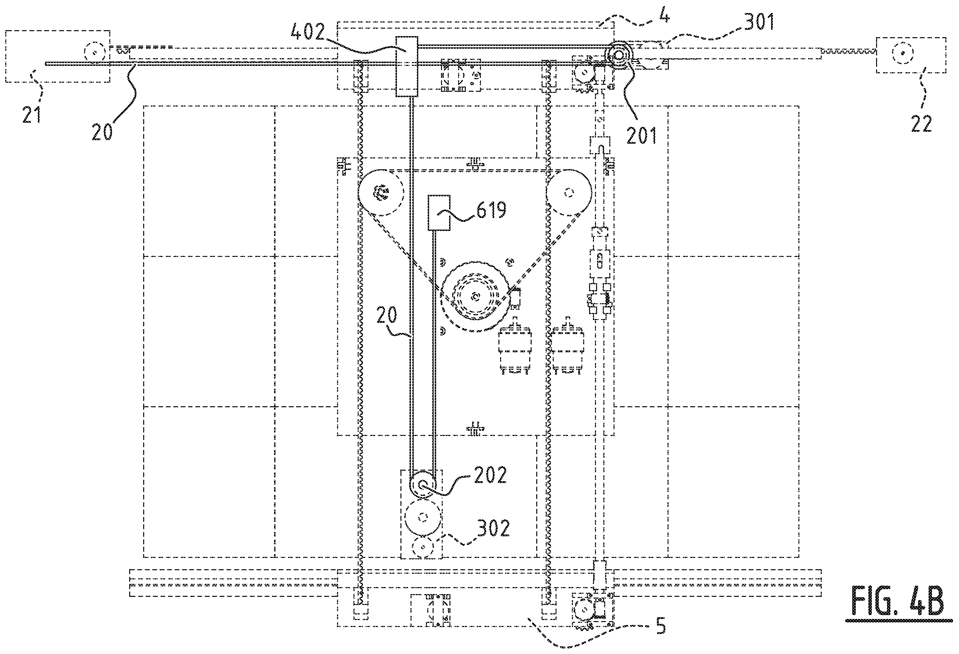

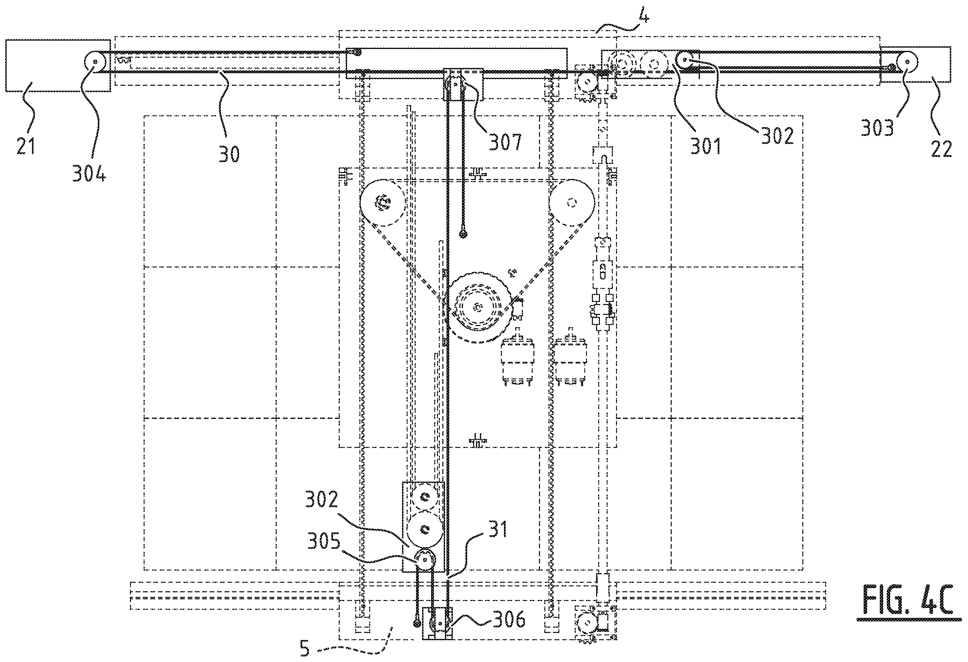

Figure 4Bis a plan view of the surface washing system of figure 1, seen from above the solar panel, wherein the routing of the power cable in the system is accentuated;
Figure 4C is a plan view of the surface washing system of figure 1, seen from above the solar panel, wherein the routing of the tension wires in the system is accentuated;

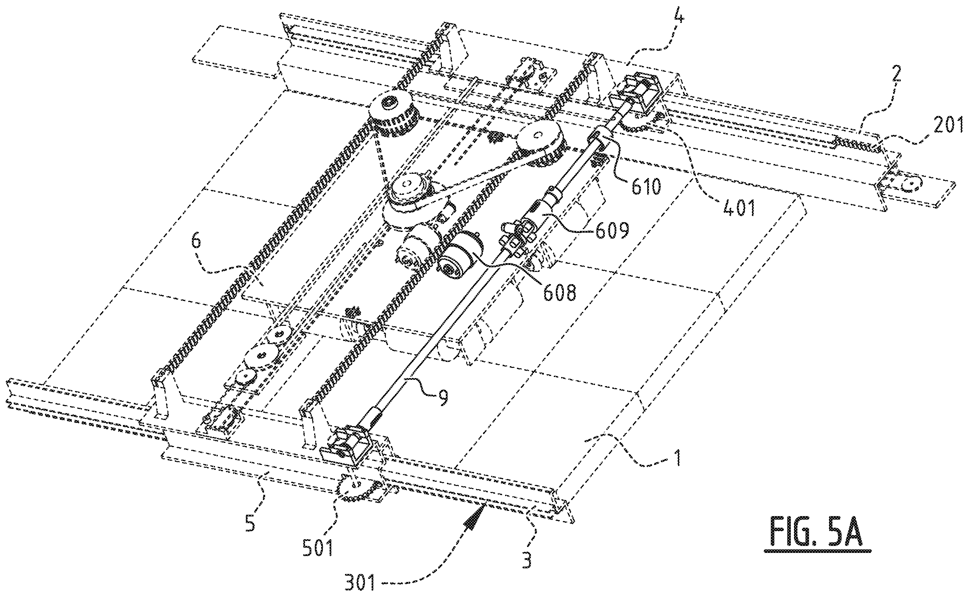

Figure 5A is a perspective view of the surface washing system of figure 1, seen from above the solar panel, wherein the driving mechanism for the longitudinal movement of the washing unit is accentuated;

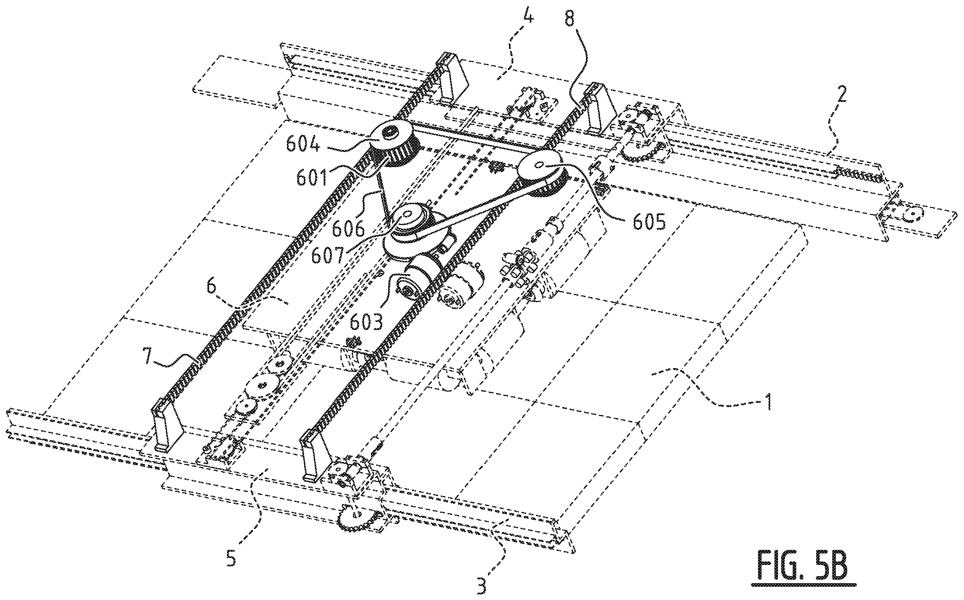

Figure 5B is a perspective view of the surface washing system of figure 1, seen from above the solar panel, wherein the driving mechanism for the lateral movement of the washing unit and driving the brushes is accentuated; and

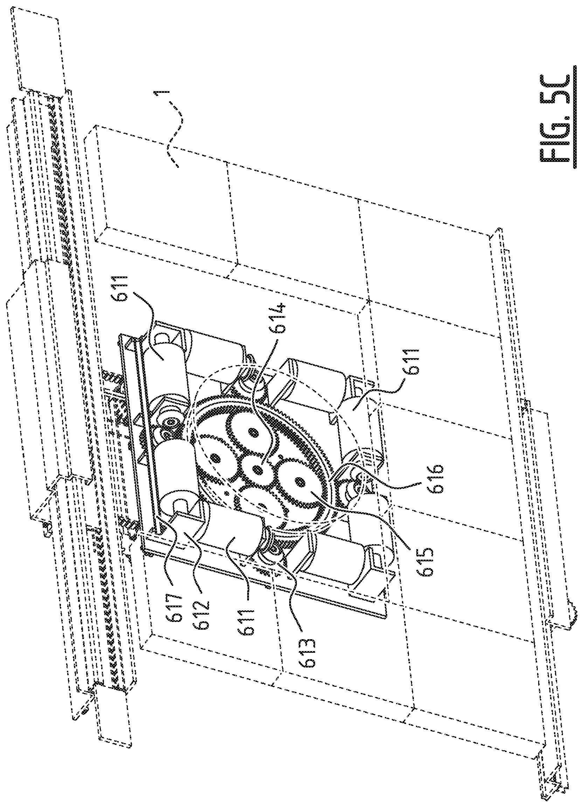

Figure 5C is a perspective view of the surface washing system of figure 1, seen from below the solar panel, wherein the gear mechanism for driving the brushes is accentuated.

According to the figures, a surface to be cleaned, such as the upper surface of a solar panel 1, is provided with a surface washing system. The solar panel 1, the guides 2, 3 and the distance between the guides 2, 3 in the figures is not shown to scale, in practice their sizes are much larger compared to the size of the washing unit 6 as shown.

The system comprises a frame consisting of first and second guides 2, 3 mounted in longitudinal direction along both the upper and lower edges of the solar panel 1. First and second sliders 4, 5 are mounted on the first and second guide 2, 3 respectively to be moved in the longitudinal direction along the guides 2, 3.

Between the sliders 4, 5 two parallel tooth racks 7, 8 and a rotatable rod 9 are mounted extending in a lateral direction which is perpendicular to the longitudinal direction. A washing unit 6 is mounted between the sliders 4, 5 to be moved there between in the lateral direction.

The washing unit 6 comprises a plate shaped frame 600 which is provided with two gear wheels 601, 602, which each engage a respective one of the tooth racks 7, 8, and said gear wheels 601, 602 are driven by a first electrical motor 603 by means of an appropriate transmission system comprising gears (not shown), wheels 604, 605, 607 and a belt 606, in order to drive the washing unit 6 in said lateral direction between the sliders 4, 5. As an alternative the transmission system can be comprised of tooth wheel gears, without a belt.

The washing unit is further provided with a second electrical motor 608 which rotates a sleeve 609, which sleeve 609 is rotatably mounted on the washing unit 6 and which extends and rotates around the rod 9. One outer end of the sleeve 609 is provided with radial pins, which engage a sleeve 610 which is mounted on the rod near one outer end thereof at the side of the first guide 2. When the washing unit 6 is moved towards the first guide 2 and reaches the returning point, the sleeve 609 will thereby drive the sleeve 610 and cause the rod 9 to rotate. The rod 9 drives two drive gears 401, 501 mounted on the first and second slider respectively, which gears 401, 501 engage two tooth racks 201, 301 mounted on the respective guides 2, 3 in order to move the washing unit 6 in the longitudinal direction. In this manner the washing unit 6 can be displaced by the second motor 608 in the longitudinal direction by approximately the width of the washing unit 6 before the first motor 603 moves the washing unit back and forward in the lateral direction.

Washing unit 6 further comprises a rotatable central brush 610 and rotatable lateral brushes 611, arranged on the other side of the frame 600 and arranged to engage the upper surface of the solar panel 1 to be cleaned. The central brush 610 is a disc shaped brush and rotates around its central axis which extends perpendicular to the surface to be cleaned. The 8 lateral brushes 611 are cylindrical and rotate around their central axes which extend parallel to the surface to be cleaned. The eight lateral brushes 611 extend in a square circumference around the central brush, two brushes 611 on each side of the square. The brushes 611 are mounted in brackets 612 on the frame 600. The brushes 610, 611 are interconnected by means of gears 613 so as to rotate together if the central gear is driven by the first electrical motor 603. To that end, as shown in figure 5, the back side of the central brush 610 is provided with a ring gear 616 with external gear teeth which engage the gears 613 and internal gear teeth, and the central brush 610 is driven by a central gear 614 mounted on the shaft of the wheel 607, which drives the central brush by means of planetary gears 615 which engage said internal gear teeth of the ring gear 616. The gears 613 engage the lateral brushes 611 by means of conical gears.

The washing unit further comprises a spray bar 617 with nozzles, which is mounted adjacent the brushes 611 on the top side of the washing unit. The system further comprises a water hose connected to said spray bar 617 and an electrical power supply cable connected to the first and second electrical motors 603, 608. With reference to figures 4A, 4B and 4C the routing of the water hose and the electrical power supply cable will be explained.

As shown in figure 4A, the water hose 10 is fixed between the outer end 21 of guide 2 and the washing unit 6. The water hose 10 is routed in the longitudinal direction over a first longitudinal water hose pulley 101 which is movable along the guide 2 in the longitudinal direction, and from said first longitudinal water hose pulley 101 towards a connector 402 on the slider 4. From there the water hose 10 is routed from the connector 402 on the slider 4 in the lateral direction over a first lateral water hose pulley 102 which is movable the lateral direction, and from said first lateral water hose pulley 102 towards a connector 618 on the washing unit 6, which is connected to the spray bar 617.

As shown in figure 4B, the electrical power cable 20 is likewise fixed between the outer end 21 of guide 2 and the washing unit 6. The power cable 20 is routed in the longitudinal direction over a first longitudinal power cable pulley 201 which is movable along the guide 2 in the longitudinal direction, and from said first longitudinal power cable pulley 201 towards the connector 402 on the slider 4. From there the power cable 20 is routed from the connector 402 on the slider 4 in the lateral direction over a first lateral power cable pulley 202 which is movable in the lateral direction, and from said first lateral power cable pulley 202 towards a connector 619 on the washing unit 6, which connector 619 is connected to the electrical motors 603, 608. The longitudinal pulleys 101, 201 are mounted on a single pulley element 301 which is slidable along the guide 22, and the lateral pulleys 102, 202 are also mounted on a single pulley element 302.

A first tension wire 30 is fixed between the other outer end 22 of the first guide 2 and the first slider 4, and is routed from said outer end 22 over a second longitudinal pulley 302 on the pulley element 301, and from said second longitudinal pulley 302 to a third longitudinal pulley 303 which is fixed to the outer end 22, and from said third longitudinal pulley 303 to a fourth longitudinal pulley 304 which is fixed to the first outer end 21, and from said fourth longitudinal pulley 304 to said first slider 4.

A second tension wire 31 is fixed between the second slider 5 and the washing unit 6, and is routed from said second slider 5, over a second lateral pulley 305 which is fixed to the pulley element 302, and from said second lateral pulley 305 to a third lateral pulley 306 which is fixed to said second slider 5, and from said third lateral pulley 306 to a fourth lateral pulley 307 which is fixed to said first slider 4, and from said fourth lateral pulley 307 to said washing unit 6.

In this manner the washing unit can move in both longitudinal and lateral directions to any location on the surface while the water hose 10 and power cable 20 remain tensioned by the tension cables 30, 31.

The washing unit 6 may comprise a programmed controller, which may be programmed to control the motors 603, 608 automatically in accordance with a predetermined schedule to perform a washing cycle. The washing unit may also be provided with communication means arranged to receive instructions from an external controller to control the motors 603, 608 to perform a washing cycle.

The invention has thus been described by means of preferred embodiments. The invention is defined by the appended claims.

## Claims

1. A surface washing system, comprising a frame and a washing unit (6) for washing a substantially flat surface, such as a solar panel (1) or a window;
wherein said frame comprises first and second elongated and mutually parallel guides (2, 3) to be mounted at two spaced apart parallel sides of said surface;
wherein said washing unit (6) is mounted to said guides (2, 3) by respective first and second sliders (4, 5) on said respective first and second guides (2, 3) and by first actuator means in such a manner that said washing unit (6) is movable between said guides (2, 3) in longitudinal direction of said guides (2, 3);
wherein said washing unit (6) is mounted to said guides (2, 3) by second actuator means in such a manner that said washing unit (6) is movable between said guides (2, 3) in lateral direction of said guides (2, 3);
wherein said system comprises a water hose (10) and/or a power cable (20) for supplying water and/or electrical power to said washing unit (6) from an external water and/or power source;
**characterized in that,**
said water hose (10) and/or power cable (20) is/are fixed between a first outer end (21) of a first one of said guides (2) and said washing unit (6) and has a fixed length there between which is substantially equal to the sum of the longitudinal distance between the outer ends (21, 22) of the guides (2, 3) and the lateral distance between the guides (2, 3), wherein said water hose (10) and/or power cable (20) is/are routed in a first longitudinal direction from said first outer end (21), over a first longitudinal pulley (101, 201) which is movable in said longitudinal direction, and from said first longitudinal pulley (101, 201) towards said first slider (4) in a second longitudinal direction along said first guide (2) which is opposite to said first longitudinal direction, and wherein said water hose (10) and/or power cable (20) is/are routed from said first slider (4) in a first lateral direction, over a first lateral pulley (102, 202) which is movable in said lateral direction, and from said first lateral pulley (102, 202) towards the washing unit (6) in a second lateral direction which is opposite to said first lateral direction;
wherein a first tension wire (30) is fixed between a second outer end (22) of said first guide (2) and said first slider (4) and has a fixed length there between, wherein said first tension wire (30) is routed from said second outer end (22), over a second longitudinal pulley (302) which is fixed to said first longitudinal pulley (101, 201), and from said second longitudinal pulley (302) to a third longitudinal pulley (303) which is fixed to said second outer end (22), and from said third longitudinal pulley (303) to a fourth longitudinal pulley (304) which is fixed to said first outer end (21), and from said fourth longitudinal pulley (304) to said first slider (4); and
wherein a second tension wire (31) is fixed between said second slider (5) and said washing unit (6) and has a fixed length there between, wherein said second tension wire (31) is routed from said second slider (5), over a second lateral pulley (305) which is fixed to said first lateral pulley (102, 202), and from said second lateral pulley (305) to a third lateral pulley (306) which is fixed to said second slider (5), and from said third lateral pulley (306) to a fourth lateral pulley (307) which is fixed to said first slider (4), and from said fourth lateral pulley (307) to said washing unit (6).

2. The surface washing system in accordance with claim 1, wherein said system comprises both the said water hose (10) for supplying water to said washing unit (6) from an external water source and the said power cable (20) for supplying electrical power to said washing unit (6) from an external power source, wherein said water hose (10) and said power cable (20) extend substantially parallel to each other.

3. The surface washing system in accordance with claim 2, wherein said water hose (10) and said power cable (20) extend over respective different ones of said first longitudinal and first lateral pulleys (101, 102, 201, 202), wherein the first longitudinal pulley (101) for the water hose (10) and the first longitudinal pulley (201) for the power cable (20) are fixed to each other, and the wherein the second longitudinal pulley for the water hose (10) and the second longitudinal pulley for the power cable (20) are fixed to each other.

4. The surface washing system in accordance with claim 1, 2 or 3, wherein said first lateral (102, 202) pulley is mounted on a third slider on said first guide (2) such that it is movable along said guide (2).

5. The surface washing system in accordance with any of the previous claims, wherein said water hose (10) and/or power cable (20) is/are fixed to said first slider (4), and extend(s) therefrom in said longitudinal direction towards the first longitudinal pulley (101, 201) and in said lateral direction towards the first lateral pulley (102, 202).

6. The surface washing system in accordance with any of the previous claims, wherein said washing unit (6) comprises at least one electrically powered motor (603, 608) for driving said first actuator means, said second actuator means and/or one or more movable brushes (610, 611) of said washing unit (6), wherein said motor is powered by said electrical cable (20).

7. The surface washing system in accordance with any of the previous claims, wherein said power cable (20) is a copper cable.

8. The surface washing system in accordance with any of the previous claims, wherein said water hose (10) is a flexible plastic hose.

9. A solar panel (1) or a window provided with a surface washing system in accordance with any of the previous claims.

10. A solar panel (1) provided with a surface washing system in accordance with any of the previous claims 1- 8, wherein said solar panel (1) extends at an angle with a horizontal plane, and wherein the guides (2, 3) extend along the respective top and bottom sides of the solar panel (1).

11. The solar panel (1) in accordance with claim 10, wherein the length of the solar panel (1) in horizontal direction is a multitude of the length in the direction perpendicular thereto.

12. A method for mounting a surface washing system to a substantially flat surface, such as a solar panel (1) or a window, said method comprising the steps of:
mounting a frame comprising first and second elongated and mutually parallel guides (2, 3) at two spaced apart parallel sides of said surface;
mounting a washing unit (6) to said guides by respective first and second sliders (4, 5) on said respective first and second guides (2, 3) and by first actuator means in such a manner that said washing unit (6) is movable between said guides (2, 3) in longitudinal direction of said guides (2, 3);
wherein said washing unit (6) is mounted to said guides (2, 3) by second actuator means in such a manner that said washing unit (6) is movable between said guides (2, 3) in lateral direction of said guides (2, 3);
providing a water hose (10) and/or a power cable (20) which has a fixed length which is substantially equal to the sum of the longitudinal distance between the outer ends (21, 22) of the guides (2, 3) and the lateral distance between the guides (2, 3) for supplying water and/or electrical power to said washing unit (6) from an external water and/or power source;
fixing said water hose (10) and/or power cable (20) between a first outer end (21) of a first one of said guides (2) and said washing unit (6), wherein said water hose (10) and/or power cable (20) is/are routed in a first longitudinal direction from said first outer end (21), over a first longitudinal pulley (101, 201) which is movable in said longitudinal direction, and from said first longitudinal pulley (101, 102) towards said first slider (4) in a second longitudinal direction along said first guide (2) which is opposite to said first longitudinal direction, and wherein said water hose (10) and/or power cable (20) is/are routed from said first slider (4) in a first lateral direction, over a first lateral pulley (102, 202) which is movable in said lateral direction, and from said first lateral pulley (102, 202) towards the washing unit (6) in a second lateral direction which is opposite to said first lateral direction;
fixing a first tension wire (30) which has a fixed length between a second outer end (22) of said first guide (2) and said first slider (4), wherein said first tension wire (30) is routed from said second outer end (22), over a second longitudinal pulley (302) which is fixed to said first longitudinal pulley (101, 201), and from said second longitudinal pulley (302) to a third longitudinal pulley (303) which is fixed to said second outer end (22), and from said third longitudinal pulley (303) to a fourth longitudinal pulley (304) which is fixed to said first outer end (21), and from said fourth longitudinal pulley (304) to said first slider (4); and
fixing a second tension wire (31) which has a fixed length between said second slider (5) and said washing unit (6), wherein said second tension wire (31) is routed from said second slider (5), over a second lateral pulley (305) which is fixed to said first lateral pulley (102, 202), and from said second lateral pulley (305) to a third lateral pulley (306) which is fixed to said second slider (5), and from said third lateral pulley (306) to a fourth lateral pulley (307) which is fixed to said first slider (4), and from said fourth lateral pulley (307) to said washing unit (6).

## Patentansprüche

1. Oberflächenwaschsystem, umfassend einen Rahmen und einer Wascheinheit (6) zum Waschen einer im Wesentlichen flachen Oberfläche, wie eines Solarpanels (1) oder eines Fensters;
wobei der Rahmen erste und zweite längliche und zueinander parallele Führungen (2, 3) umfasst, die an zwei beabstandeten parallelen Seiten der Oberfläche zu montieren sind;
wobei die Wascheinheit (6) durch einen entsprechenden ersten und zweiten Gleiter (4, 5) auf der entsprechenden ersten und zweiten Führung (2, 3) und durch erste Betätigungsmittel auf eine derartige Weise an den Führungen (2, 3) montiert ist, dass die Wascheinheit (6) zwischen den Führungen (2, 3) in Längsrichtung der Führungen (2, 3) bewegbar ist;
wobei die Wascheinheit (6) durch zweite Betätigungsmittel auf eine derartige Weise an den Führungen (2, 3) montiert ist, dass die Wascheinheit (6) zwischen den Führungen (2, 3) in seitlicher Richtung der Führungen (2, 3) bewegbar ist;
wobei das System einen Wasserschlauch (10) und/oder ein Stromkabel (20) zum Versorgen der Wascheinheit (6) mit Wasser und/oder elektrischem Strom aus einer externen Wasser- und/oder Stromquelle umfasst;
**dadurch gekennzeichnet, dass**
wobei der Wasserschlauch (10) und/oder das Stromkabel (20) zwischen einem ersten äußeren Ende (21) einer ersten der Führungen (2) und der Wascheinheit (6) fixiert ist/sind und dazwischen eine fixierte Länge aufweist, die im Wesentlichen gleich der Summe des Längsabstands zwischen den äußeren Enden (21, 22) der Führungen (2, 3) und des seitlichen Abstands zwischen den Führungen (2, 3) ist, wobei der Wasserschlauch (10) und/oder das Stromkabel (20) in einer ersten Längsrichtung von dem ersten äußeren Ende (21) über eine erste Längsrolle (101, 201), die in der Längsrichtung bewegbar ist, und von der ersten Längsrolle (101, 201) in einer zweiten Längsrichtung entlang der ersten Führung (2), die der ersten Längsrichtung entgegengesetzt ist, zu dem ersten Gleiter (4) hin geleitet wird/werden, und wobei der Wasserschlauch (10) und/oder das Stromkabel (20) von dem ersten Gleiter (4) in einer ersten seitlichen Richtung über eine erste seitliche Rolle (102, 202), die in der seitlichen Richtung bewegbar ist, und von der ersten seitlichen Rolle (102, 202) in einer zweiten seitlichen Richtung, die der ersten seitlichen Richtung entgegengesetzt ist, zu der Wascheinheit (6) hin geleitet wird/werden;
wobei ein erster Spanndraht (30) zwischen einem zweiten äußeren Ende (22) der ersten Führung (2) und dem ersten Gleiter (4) fixiert ist und dazwischen eine fixierte Länge aufweist, wobei der erste Spanndraht (30) von dem zweiten äußeren Ende (22) über eine zweite Längsrolle (302), die an der ersten Längsrolle (101, 201) fixiert ist, und von der zweiten Längsrolle (302) zu einer dritten Längsrolle (303), die an dem zweiten äußeren Ende (22) fixiert ist, und von der dritten Längsrolle (303) zu einer vierten Längsrolle (304), die an dem ersten äußeren Ende (21) fixiert ist, und von der vierten Längsrolle (304) zu dem ersten Gleiter (4) geleitet wird/werden; und
wobei ein zweiter Spanndraht (31) zwischen dem zweiten Gleiter (5) und der Wascheinheit (6) fixiert ist und dazwischen eine fixierte Länge aufweist, wobei der zweite Spanndraht (31) von dem zweiten Gleiter (5) über eine zweite seitliche Rolle (305), die an der ersten seitlichen Rolle (102, 202) fixiert ist, und von der zweiten seitlichen Rolle (305) zu einer dritten seitlichen Rolle (306), die an dem zweiten Gleiter (5) fixiert ist, und von der dritten seitlichen Rolle (306) zu einer vierten seitlichen Rolle (307), die an dem ersten Gleiter (4) fixiert ist, und von der vierten seitlichen Rolle (307) zu der Wascheinheit (6) geleitet wird.

2. Oberflächenwaschsystem nach Anspruch 1, wobei das System sowohl den Wasserschlauch (10) zum Versorgen der Wascheinheit (6) mit Wasser von einer externen Wasserquelle als auch das Stromkabel (20) zum Versorgen der Wascheinheit (6) mit elektrischem Strom von einer externen Stromquelle umfasst, wobei der Wasserschlauch (10) und das Stromkabel (20) sich im Wesentlichen parallel zueinander erstrecken.

3. Oberflächenwaschsystem nach Anspruch 2, wobei der Wasserschlauch (10) und das Stromkabel (20) sich über jeweils unterschiedliche der ersten Längs- und ersten seitlichen Rollen (101, 102, 201, 202) erstrecken, wobei die erste Längsrolle (101) für den Wasserschlauch (10) und die erste Längsrolle (201) für das Stromkabel (20) aneinander fixiert sind und wobei die zweite Längsrolle für den Wasserschlauch (10) und die zweite Längsrolle für das Stromkabel (20) aneinander fixiert sind.

4. Oberflächenwaschsystem nach Anspruch 1, 2 oder 3, wobei die erste seitliche (102, 202) Rolle auf einem dritten Gleiter auf der ersten Führung (2) derart montiert ist, dass sie entlang der Führung (2) bewegbar ist.

5. Oberflächenwaschsystem nach einem der vorstehenden Ansprüche, wobei der Wasserschlauch (10) und/oder das Stromkabel (20) an dem ersten Gleiter (4) fixiert ist/sind und sich von diesem in der Längsrichtung zu der ersten Längsrolle (101, 201) hin und in der seitlichen Richtung zu der ersten seitlichen Rolle (102, 202) hin erstrecken.

6. Oberflächenwaschsystem nach einem der vorstehenden Ansprüche, wobei die Wascheinheit (6) mindestens einen elektrisch betriebenen Motor (603, 608) zum Antreiben des ersten Betätigungsmittels, des zweiten Betätigungsmittels und/oder einer oder mehrerer bewegbarer Bürsten (610, 611) der Wascheinheit (6) umfasst, wobei der Motor durch das elektrische Kabel (20) mit Strom versorgt wird.

7. Oberflächenwaschystem nach einem der vorstehenden Ansprüche, wobei das Stromkabel (20) ein Kupferkabel ist.

8. Oberflächenwaschsystem nach einem der vorstehenden Ansprüche, wobei der Wasserschlauch (10) ein flexibler Kunststoffschlauch ist.

9. Solarpanel (1) oder Fenster, das mit einem Oberflächenwaschsystem nach einem der vorstehenden Ansprüche ausgestattet ist.

10. Solarpanel (1), das mit einem Oberflächenwaschsystem nach einem der vorstehenden Ansprüche 1 bis 8 ausgestattet ist, wobei das Solarpanel (1) sich in einem Winkel zu einer horizontalen Ebene erstreckt und wobei die Führungen (2, 3) sich entlang der jeweiligen Ober- und Unterseite des Solarpanels (1) erstrecken.

11. Solarpanel (1) nach Anspruch 10, wobei die Länge des Solarpanels (1) in horizontaler Richtung ein Vielfaches der Länge in der dazu senkrechten Richtung beträgt.

12. Verfahren zum Montieren eines Oberflächenwaschsystems auf einer im Wesentlichen flachen Oberfläche, wie einem Solarpanel (1) oder einem Fenster, das Verfahren umfassend die Schritte:
Montieren eines Rahmens, umfassend erste und zweite längliche und zueinander parallele Führungen (2, 3) an zwei beabstandeten parallelen Seiten der Oberfläche;
Montieren einer Wascheinheit (6) an den Führungen durch den entsprechenden ersten und zweiten Gleiter (4, 5) auf der entsprechenden ersten und zweiten Führung (2, 3) und durch erste Betätigungsmittel auf eine derartige Weise, dass die Wascheinheit (6) zwischen den Führungen (2, 3) in Längsrichtung der Führungen (2, 3) bewegbar ist;
wobei die Wascheinheit (6) durch zweite Betätigungsmittel auf eine derartige Weise an den Führungen (2, 3) montiert ist, dass die Wascheinheit (6) zwischen den Führungen (2, 3) in seitlicher Richtung der Führungen (2, 3) bewegbar ist;
Bereitstellen eines Wasserschlauchs (10) und/oder eines Stromkabels (20), das eine fixierte Länge aufweist, die im Wesentlichen gleich der Summe des Längsabstands zwischen den äußeren Enden (21, 22) der Führungen (2, 3) und des seitlichen Abstands zwischen den Führungen (2, 3) zum Versorgen der Wascheinheit (6) mit Wasser und/oder elektrischem Strom von einer externen Wasser- und/oder Stromquelle ist;
Fixieren des Wasserschlauchs (10) und/oder des Stromkabels (20) zwischen einem ersten äußeren Ende (21) einer ersten der Führungen (2) und der Wascheinheit (6), wobei der Wasserschlauch (10) und/oder das Stromkabel (20) in einer ersten Längsrichtung von dem ersten äußeren Ende (21) über eine erste Längsrolle (101, 201), die in der Längsrichtung bewegbar ist, und von der ersten Längsrolle (101, 201) in einer zweiten Längsrichtung entlang der ersten Führung (2), die der ersten Längsrichtung entgegengesetzt ist, zu dem ersten Gleiter (4) hin geleitet wird/werden, und wobei der Wasserschlauch (10) und/oder das Stromkabel (20) von dem ersten Gleiter (4) in einer ersten seitlichen Richtung über eine erste seitliche Rolle (102, 202), die in der seitlichen Richtung bewegbar ist, und von der ersten seitlichen Rolle (102, 202) in einer zweiten seitlichen Richtung, die der ersten seitlichen Richtung entgegengesetzt ist, zu der Wascheinheit (6) hin geleitet wird/werden;
Fixieren eines ersten Spanndrahts (30), der eine fixierte Länge zwischen einem zweiten äußeren Ende (22) der ersten Führung (2) und dem ersten Gleiter (4) aufweist, wobei der erste Spanndraht (30) von dem zweiten äußeren Ende (22) über eine zweite Längsrolle (302), die an der ersten Längsrolle (101, 201) fixiert ist, und von der zweiten Längsrolle (302) zu einer dritten Längsrolle (303), die an dem zweiten äußeren Ende (22) fixiert ist, und von der dritten Längsrolle (303) zu einer vierten Längsrolle (304), die an dem ersten äußeren Ende (21) fixiert ist, und von der vierten Längsrolle (304) zu dem ersten Gleiter (4) geleitet wird; und
und Fixieren eines zweiten Spanndrahts (31), der eine fixierte Länge zwischen dem zweiten Gleiter (5) und der Wascheinheit (6) aufweist, wobei der zweite Spanndraht (31) von dem zweiten Gleiter (5) über eine zweite seitliche Rolle (305), die an der ersten seitlichen Rolle (102, 202) fixiert ist, und von der zweiten seitlichen Rolle (305) zu einer dritten seitlichen Rolle (306), die an dem zweiten Gleiter (5) fixiert ist, und von der dritten seitlichen Rolle (306) zu einer vierten seitlichen Rolle (307), die an dem ersten Gleiter (4) fixiert ist, und von der vierten seitlichen Rolle (307) zu der Wascheinheit (6) geleitet wird.

## Revendications

1. Système de lavage de surface, comprenant un cadre et une unité de lavage (6) pour le lavage d'une surface sensiblement plane, telle qu'un panneau solaire (1) ou une fenêtre ;
dans lequel ledit cadre comprend des premier et second guides (2, 3) allongés et mutuellement parallèles à monter au niveau de deux côtés parallèles espacés de ladite surface ;
dans lequel ladite unité de lavage (6) est montée sur lesdits guides (2, 3) par des premier et deuxième coulisseaux (4, 5) respectifs sur lesdits premier et second guides (2, 3) respectifs et par des premiers moyens d'actionnement de telle manière que ladite unité de lavage (6) est mobile entre lesdits guides (2, 3) dans la direction longitudinale desdits guides (2, 3) ;
dans lequel ladite unité de lavage (6) est montée sur lesdits guides (2, 3) par des seconds moyens d'actionnement de telle manière que ladite unité de lavage (6) est mobile entre lesdits guides (2, 3) dans la direction latérale desdits guides (2, 3) ;
dans lequel ledit système comprend un tuyau à eau (10) et/ou un câble électrique (20) pour la fourniture d'eau et/ou d'énergie électrique à ladite unité de lavage (6) à partir d'une source d'eau et/ou d'électricité externe ;
**caractérisé en ce que**
ledit tuyau à eau (10) et/ou ledit câble électrique (20) est/sont fixé(s) entre une première extrémité extérieure (21) d'un premier desdits guides (2) et ladite unité de lavage (6) et présente une longueur fixe entre les deux qui est sensiblement égale à la somme de la distance longitudinale entre les extrémités extérieures (21, 22) des guides (2, 3) et de la distance latérale entre les guides (2, 3), dans lequel ledit tuyau à eau (10) et/ou ledit câble électrique (20) est/sont acheminé(s) dans une première direction longitudinale à partir de ladite première extrémité extérieure (21), sur une première poulie longitudinale (101, 201) qui est mobile dans ladite direction longitudinale, et à partir de ladite première poulie longitudinale (101, 201) vers ledit premier coulisseau (4) dans une seconde direction longitudinale le long dudit premier guide (2) qui est opposé à ladite première direction longitudinale et dans lequel ledit tuyau à eau (10) et/ou ledit câble électrique (20) est/sont acheminé(s) à partir dudit premier coulisseau (4) dans une première direction latérale, sur une première poulie latérale (102, 202) qui est mobile dans ladite direction latérale, et à partir de ladite première poulie latérale (102, 202) vers l'unité de lavage (6) dans une seconde direction latérale qui est opposée à ladit première direction latérale ;
dans lequel un premier fil de tension (30) est fixé entre une seconde extrémité extérieure (22) dudit premier guide (2) et ledit premier coulisseau (4) et présente une longueur fixe entre les deux, dans lequel ledit premier fil de tension (30) est acheminé à partir de ladite seconde extrémité extérieure (22), sur une deuxième poulie longitudinale (302) qui est fixée à ladite première poulie longitudinale (101, 201), et à partir de ladite deuxième poulie longitudinale (302) vers une troisième poulie longitudinale (303) qui est fixée à ladite seconde extrémité extérieure (22) et à partir de ladite troisième poulie longitudinale (303) vers une quatrième poulie longitudinale (304) qui est fixée à ladite première extrémité extérieure (21) et à partir de ladite quatrième poulie longitudinale (304) vers ledit premier coulisseau (4) ; et
dans lequel un second fil de tension (31) est fixé entre ledit deuxième coulisseau (5) et ladite unité de lavage (6) et présente une longueur fixe entre les deux, dans lequel ledit second fil de tension (31) est acheminé à partir dudit deuxième coulisseau (5), sur une deuxième poulie latérale (305) qui est fixée à ladite première poulie latérale (102, 202), et à partir de ladite deuxième poulie latérale (305) vers une troisième poulie latérale (306) qui est fixée audit deuxième coulisseau (5) et à partir de ladite troisième poulie latérale (306) vers une quatrième poulie latérale (307) qui est fixée audit premier coulisseau (4) et à partir de ladite quatrième poulie latérale (307) vers ladite unité de lavage (6).

2. Système de lavage de surface selon la revendication 1, dans lequel ledit système comprend à la fois ledit tuyau à eau (10) pour la fourniture d'eau à ladite unité de lavage (6) à partir d'une source d'eau externe et ledit câble électrique (20) pour la fourniture d'énergie électrique à ladite unité de lavage (6) à partir d'une source d'électricité externe, dans lequel ledit tuyau à eau (10) et ledit câble électrique (20) s'étendent de manière sensiblement parallèle l'un à l'autre.

3. Système de lavage de surface selon la revendication 2, dans lequel ledit tuyau à eau (10) et ledit câble électrique (20) s'étendent sur des poulies respectives différentes parmi lesdites premières poulies longitudinales et lesdites premières poulies latérales (101, 102, 201, 202), dans lequel la première poulie longitudinale (101) pour le tuyau à eau (10) et la première poulie longitudinale (201) pour le câble électrique (20) sont fixées l'une à l'autre et dans lequel la deuxième poulie longitudinale pour le tuyau à eau (10) et la deuxième poulie longitudinale pour le câble électrique (20) sont fixées l'une à l'autre.

4. Système de lavage de surface selon la revendication 1, 2 ou 3, dans lequel ladite première poulie latérale (102, 202) est montée sur un troisième coulisseau sur ledit premier guide (2) de sorte qu'elle est mobile le long dudit guide (2).

5. Système de lavage de surface selon l'une quelconque des revendications précédentes, dans lequel ledit tuyau à eau (10) et/ou ledit câble électrique (20) est/sont fixé(s) audit premier coulisseau (4) et s'étend(ent) à partir de celui-ci dans ladite direction longitudinale vers la première poulie longitudinale (101, 201) et dans ladite direction latérale vers la première poulie latérale (102, 202).

6. Système de lavage de surface selon l'une quelconque des revendications précédentes, dans lequel ladite unité de lavage (6) comprend au moins un moteur électrique (603, 608) pour l'entraînement desdits premiers moyens d'actionnement, desdits seconds moyens d'actionnement et/ou d'une ou de plusieurs brosses mobiles (610, 611) de ladite unité de lavage (6), dans lequel ledit moteur est alimenté par ledit câble électrique (20).

7. Système de lavage de surface selon l'une quelconque des revendications précédentes, dans lequel ledit câble électrique (20) est un câble en cuivre.

8. Système de lavage de surface selon l'une quelconque des revendications précédentes, dans lequel ledit tuyau à eau (10) est un tuyau flexible en plastique.

9. Panneau solaire (1) ou fenêtre équipé(e) d'un système de lavage de surface selon l'une quelconque des revendications précédentes.

10. Panneau solaire (1) équipé d'un système de lavage de surface selon l'une quelconque des revendications précédentes 1 à 8, dans lequel ledit panneau solaire (1) s'étend sous un angle par rapport à un plan horizontal et dans lequel les guides (2, 3) s'étendent le long des côtés supérieur et inférieur respectifs du panneau solaire (1).

11. Panneau solaire (1) selon la revendication 10, dans lequel la longueur du panneau solaire (1) dans la direction horizontale est un multiple de la longueur dans la direction perpendiculaire à celle-ci.

12. Procédé de montage d'un système de lavage de surface sur une surface sensiblement plane, telle qu'un panneau solaire (1) ou une fenêtre, ledit procédé comprenant les étapes consistant à :
monter un cadre comprenant des premier et second guides (2, 3) allongés et mutuellement parallèles au niveau de deux côtés parallèles espacés de ladite surface ;
monter une unité de lavage (6) sur lesdits guides par des premier et deuxième coulisseaux (4, 5) respectifs sur lesdits premier et second guides (2, 3) respectifs et par des premiers moyens d'actionnement de telle manière que ladite unité de lavage (6) est mobile entre lesdits guides (2, 3) dans la direction longitudinale desdits guides (2, 3) ;
dans lequel ladite unité de lavage (6) est montée sur lesdits guides (2, 3) par des seconds moyens d'actionnement de telle manière que ladite unité de lavage (6) est mobile entre lesdits guides (2, 3) dans la direction latérale desdits guides (2, 3) ;
fournir un tuyau à eau (10) et/ou un câble électrique (20) qui présente(nt) une longueur fixe qui est sensiblement égale à la somme de la distance longitudinale entre les extrémités extérieures (21, 22) des guides (2, 3) et de la distance latérale entre les guides (2, 3) pour la fourniture d'eau et/ou d'énergie électrique à ladite unité de lavage (6) à partir d'une source d'eau et/ou d'électricité externe ;
fixer ledit tuyau à eau (10) et/ou câble électrique (20) entre une première extrémité extérieure (21) d'un premier desdits guides (2) et ladite unité de lavage (6), dans lequel ledit tuyau à eau (10) et/ou ledit câble électrique (20) est/sont acheminé(s) dans une première direction longitudinale à partir de ladite première extrémité extérieure (21), sur une première poulie longitudinale (101, 201) qui est mobile dans ladite direction longitudinale, et à partir de ladite première poulie longitudinale (101, 201) vers ledit premier coulisseau (4) dans une seconde direction longitudinale le long dudit premier guide (2) qui est opposé à ladite première direction longitudinale et dans lequel ledit tuyau à eau (10) et/ou ledit câble électrique (20) est/sont acheminé(s) à partir dudit premier coulisseau (4) dans une première direction latérale, sur une première poulie latérale (102, 202) qui est mobile dans ladite direction latérale, et à partir de ladite première poulie latérale (102, 202) vers l'unité de lavage (6) dans une seconde direction latérale qui est opposée à ladite première direction latérale ;
fixer un premier fil de tension (30) qui présente une longueur fixe entre une seconde extrémité extérieure (22) dudit premier guide (2) et ledit premier coulisseau (4), dans lequel ledit premier fil de tension (30) est acheminé à partir de ladite seconde extrémité extérieure (22), sur une deuxième poulie longitudinale (302) qui est fixée à ladite première poulie longitudinale (101, 201), et à partir de ladite deuxième poulie longitudinale (302) vers une troisième poulie longitudinale (303) qui est fixée à ladite seconde extrémité extérieure (22) et à partir de ladite troisième poulie longitudinale (303) vers une quatrième poulie longitudinale (304) qui est fixée à ladite première extrémité extérieure (21) et à partir de ladite quatrième poulie longitudinale (304) vers ledit premier coulisseau (4) ; et
fixer un second fil de tension (31) qui présente une longueur fixe entre ledit deuxième coulisseau (5) et ladite unité de lavage (6), dans lequel ledit second fil de tension (31) est acheminé à partir dudit deuxième coulisseau (5), sur une deuxième poulie latérale (305) qui est fixée à ladite première poulie latérale (102, 202), et à partir de ladite deuxième poulie latérale (305) vers une troisième poulie latérale (306) qui est fixée audit deuxième coulisseau (5) et à partir de ladite troisième poulie latérale (306) vers une quatrième poulie latérale (307) qui est fixée audit premier coulisseau (4) et à partir de ladite quatrième poulie latérale (307) vers ladite unité de lavage (6).
